# EUROPEAN PATENT SPECIFICATION

(11) **EP 3 226 729 B1**
(45) Date of publication and mention of the grant of the patent: **11.09.2019**
(21) Application number: 15805305.8
(22) Date of filing: 25.11.2015
(51) Int. Cl.: A47J 31/46, A47J 31/52

(54) **MACHINE FOR THE PREPARATION OF BEVERAGES, IN PARTICULAR ESPRESSO COFFEE**
MASCHINE ZUR HERSTELLUNG VON GETRÄNKEN, INSBESONDERE VON ESPRESSOKAFFEE
MACHINE POUR LA PRÉPARATION DE BOISSONS, EN PARTICULIER DE CAFÉ ESPRESSO

(30) Priority: 02.12.2014 IT TO20141002
(43) Date of publication of application: 11.10.2017
(73) Proprietor: Luigi Lavazza S.p.A., 10152 Torino (IT)
(72) Inventor: ROTTA, Denis, 10144 Torino (IT)
(74) Representative: Rondano, Davide
(86) International application number: PCT/IB2015/059117
(87) International publication number: WO 2016/087996

(56) References cited:
- EP-A1- 1 764 014
- EP-A1- 1 795 095
- EP-A1- 2 168 466

## Description

The present invention relates to a machine for the preparation of beverages, in particular espresso coffee.

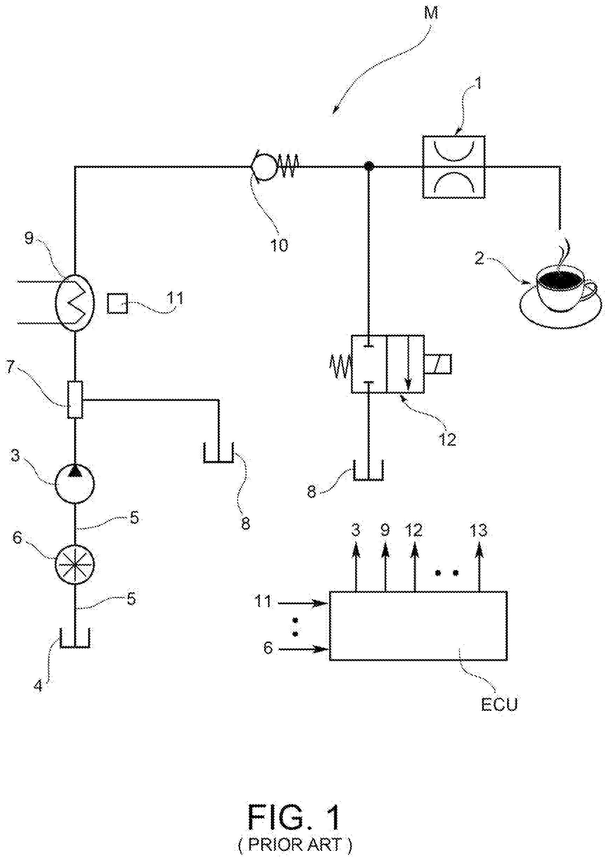

A machine M of this type is schematically illustrated in Figure 1 of the accompanying drawings. It comprises a brewing assembly 1, hydraulically substantially equivalent to a choke, for dispensing a beverage into a collection container 2 such as a cup or the like. An electric vibration pump 3 has its inlet connected to a water tank 4 via a suction pipe 5 on which may be interposed a flow-rate meter 6, for example of the turbine type, for providing electrical signals (pulses) indicative of the amount of water sucked by the pump. The outlet or discharge of the pump 3 is connected to a self-priming valve 7, of a type known per se, which in use continuously draws a quantity of water from the outlet of the pump 3 and discharges the water drawn into a drip recipient 8 such as the drip tray which is usually provided in a machine for the preparation of coffee.

The water that comes from the pump 3 and passes through the self-priming valve 7 therefore arrives at an electric heater device or boiler 9, and from there it continues on to the brewing assembly 1.

Between the heating device 9 and the brewing assembly 1 is interposed a unidirectional hydraulic valve 10 adapted to allow a flow of water towards said brewing assembly when the pressure of the water supplied by the pump 3 exceeds a predetermined threshold value, for example equal to 8 bar.

An electronic temperature sensor 11 is associated with the heating device 9.

The reference sign 12 designates a solenoid valve, having its inlet coupled between the outlet of the unidirectional valve 10 and the inlet of the brewing assembly 1 and its outlet connected to the drip recipient 8. Said solenoid valve 12 is capable of assuming an open condition and a closed condition in which it allows and prevents, respectively, the flow of water from its inlet towards the drip recipient 8, so as to drain off the water which, after a beverage has been dispensed, remains between the brewing assembly 1 and the hydraulic valve 10. This function is not strictly necessary, and in any case is implemented after the beverage has been prepared and dispensed.

The machine M also comprises an electronic control unit ECU, embodied in a manner known per se and connected to the pump 3, the heating device 9, the solenoid valve 12 and to any additional devices not shown. This unit is also connected to the flow-rate meter 6 and the temperature sensor 11, to receive the signals generated by them in the operation of the machine M.

The pump 3 is a vibration pump and, in a manner known per se, comprises a control solenoid valve connected in series with a diode which allows only positive (or negative) half-waves of the alternating current fed to it to pass through the solenoid valve. The solenoid valve consequently causes successive pulse movements of a piston that controls the supply of water from the tank 4 to a pumping chamber with a variable volume. The pump 3 comprises non-return valves which prevent the water from the pumping chamber from flowing back towards the tank 4, and prevent the water supplied to the outlet or discharge of the pump from flowing back into the pumping chamber.

In the case where the variable volume chamber of the pump 3 is partially or completely empty of water, the air contained therein, which is easily compressible, may be unable to overcome the back pressure present in the hydraulic circuit downstream of the pump. In this case, the air in the variable volume chamber of the pump is continuously expanded and compressed, without being evacuated through the outlet of the pump. In such a situation, the pump would not be primed and would not pump the water necessary for the preparation of the beverage. However, such a situation is prevented by the self-priming valve 7 which continuously draws a quantity of water from the outlet or discharge of the pump, said quantity of water moreover not being constant but variable as a function of the back pressure in the hydraulic circuit downstream.

The solution according to Figure 1, in addition to requiring a self-priming valve, is disadvantageous when the indication of the flow-rate meter 6 is used to meter, on the basis of a selection made by the user, the quantity of beverage desired. The flow-rate meter 6, arranged on the suction side of the pump 3, can detect the amount of water taken from the tank 4 but cannot accurately determine the amount of water actually sent to the brewing assembly, owing to the fact that the self-priming valve 7 continuously draws variable amounts of water from the discharge of the pump 3.

EP 1 795 095 discloses a machine for preparing/dispensing hot water, comprising:
a dispensing outlet for dispensing hot water into a collection container,
a pump, having its inlet connected to a tank and its outlet or discharge connected to said dispensing outlet,
a unidirectional hydraulic valve interposed between the pump and the dispensing outlet to allow a flow of water towards said dispensing outlet when the pressure of the water supplied by the pump exceeds a predetermined threshold,
electric heating means for heating the water supplied by the pump,
at least one solenoid valve having its inlet coupled between the outlet of the pump and the dispensing outlet and adapted to assume an open condition and a closed condition in which it allows and prevents, respectively, a flow of fluid from its inlet towards a discharge environment, for controlling a function of the machine which is necessary for the preparation of hot water, and
an electronic control unit predisposed to drive the pump, the heating means and said solenoid valve according to predetermined manners.

One aim of the present invention is to provide a machine for the preparation of beverages of the type initially described, which can overcome the drawbacks outlined above found in prior art machines.

This aim is achieved according to the invention with a machine as specified in independent claim 1.

In one embodiment, the abovementioned solenoid valve, designed to control an auxiliary function of the machine and not used for the preparation of the beverage, is of normally closed type, and is interposed between said electric heating means and a nozzle for dispensing a flow of steam used for example to froth milk or the like.

In another embodiment, the abovementioned solenoid valve is interposed between the outlet of the unidirectional hydraulic valve and a drip recipient so as to discharge into this container the water which, after a beverage has been dispensed, remains between said unidirectional hydraulic valve and the brewing assembly.

Further features and advantages of the invention will appear from the detailed description which follows, provided purely by way of non-limiting example, with reference to the accompanying drawings, in which:
Figure 1, already described above, schematically shows a machine for the preparation of beverages according to the prior art;
Figure 2 schematically shows a machine for the preparation of beverages according to the present invention;
Figure 3 schematically shows an alternative embodiment of a machine for the preparation of beverages according to the invention;
Figure 4 is a perspective view of an embodiment of a valve unit included in the machine according to Figure 3; and
Figure 5 is a view in partial section along the line V-V of Figure 5.

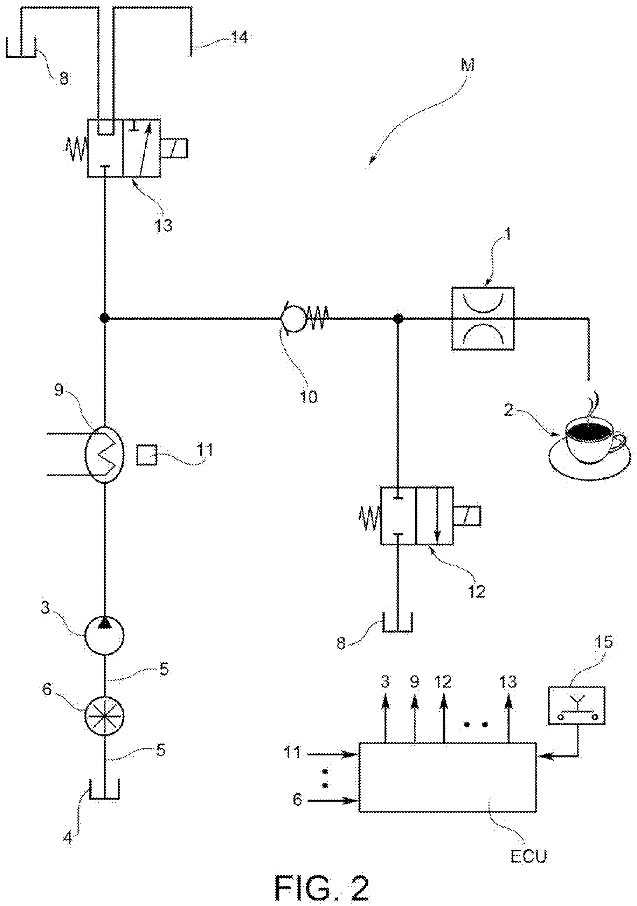

Figure 2 schematically shows a machine M for the preparation of beverages according to the present invention. In this figure, parts and elements already described have again been designated with the same reference numbers used previously.

The machine M according to Figure 2 does not include a self-priming valve at the outlet of the electric vibration pump 3.

In this machine, the function of priming the pump 3 is performed by using, in the initial phase of the beverage preparation cycle, a two-position three-way solenoid valve 13, normally closed, which has its inlet connected to the outlet of the heating device 9 and which, in the de-energized state, interconnects a steam dispensing nozzle 14 with the drip recipient 8, while in the other state it couples the nozzle 14 with the outlet of the heating device, to enable hot steam to be dispensed, for example for heating and/or frothing milk and the like.

Like the solenoid valve 12, the solenoid valve 13 is also not normally used in the beverage preparation cycle. However, in the machine M according to the invention shown in Figure 2, the solenoid valve 13 is controlled by the electronic unit ECU in such a way that at the start of a beverage preparation cycle it is energized substantially concurrently with the activation of the pump 3. In the energized state and open, the solenoid valve 13 allows water to be drawn from the circuit connected to the outlet of the pump 3, said water being discharged through the nozzle 14. The amount of water that needs to be drawn in order to prime the pump 3 is actually very small, just a few drops, such that it does not cause any problems.

As soon as the pump is started, something the ECU unit can detect by observing the signals supplied by the flow-rate meter 6, said ECU unit de-energizes the solenoid valve 13 once again and the latter, when seen from the outlet of the heating device 9, appears once again to be closed. The pump 3 can then supply a flow of water to the brewing assembly 1, and the indication of flow provided by the flow-rate meter 6 is positively and precisely indicative of the quantity of beverage that is produced and dispensed.

It is therefore possible to accurately meter the quantity of beverage produced and dispensed, in accordance with a selection entered by the user, for example by means of a device designated by 15 in Figure 2.

The machine M of Figure 2 operates substantially as in the machine according to the prior art shown in Figure 1: after the solenoid valve 13 is de-energized, the flow of water supplied by the pump 3 causes an increase in pressure in the downstream circuit, until this pressure exceeds the threshold associated with the unidirectional valve 10, which then opens and allows the flow of water to reach and pass through the brewing assembly 1.

Dispensing of the beverage into the collection cup 2 then begins.

The ECU unit may advantageously be arranged to interrupt the dispensing of the beverage when the signals supplied by the flow-rate meter 6 indicate that a quantity of beverage corresponding to the desired dose, set by the user, has been dispensed.

The pump 3 and the heating device 9 are turned off and the solenoid valve 12 is energized. The latter then goes into the open state, and allows the water sitting between the valve 10 and the brewing assembly 1 to be discharged to the drip recipient 8.

Following the drop in pressure downstream of the valve 10, the latter closes.

The machine is then ready for a new beverage preparation cycle.

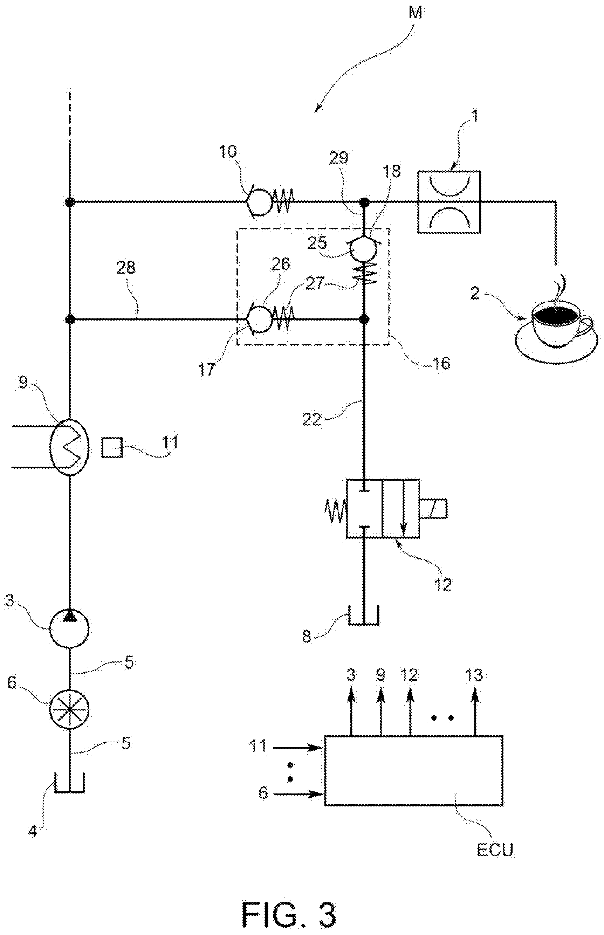

Figure 3 shows an alternative embodiment of a machine M according to the present invention. Again in this figure, the parts and elements already described have again been designated with the same reference numbers used previously.

Again, in the machine M according to Figure 3, the outlet or discharge of the pump 3 is not connected to a self-priming valve.

In this case, the discharge solenoid valve 12, controlled accordingly by the electronic control unit ECU, is advantageously used to prime the pump 3.

Advantageously, the machine M includes a valve device generally designated by 16. This valve device 16 includes a second unidirectional valve 17, connected between the inlet of the solenoid valve 12 and the outlet of the heating device 9, and a third unidirectional valve 18 connected between the inlet of the solenoid valve 12 and the outlet of the unidirectional valve 10.

The unidirectional valve 17 is constructed and connected in such a way as to allow a flow of water from the outlet of the heater 9 to the inlet of the solenoid valve 12, when the water pressure at the outlet of the heater 9 exceeds a prefixed threshold, markedly lower than the pressure threshold associated with the valve 10 and for example equal to approximately 1 bar.

The unidirectional valve 18 is constructed and arranged in such a way as to allow a flow of water from the outlet of the valve 10 to the inlet of the solenoid valve 12, when the pressure at the outlet of the valve 10 is greater than a predetermined threshold value, for example equal to approximately 1 bar.

The valve 18 has the purpose of preventing, during the dispensing of the beverage, the pressure in the brewing assembly 1 from being detected by the threshold valve 17 instead of by the valve 10: once the solenoid valve 12 is closed, the pump 3 fills all the ducts downstream of the valves 17 and 18 with water, and then the valve 10 may open. The water in the ducts upstream of the valves 17 and 18 is at this point in equilibrium at the same pressure and therefore the flow of water passes only through the valve 10.

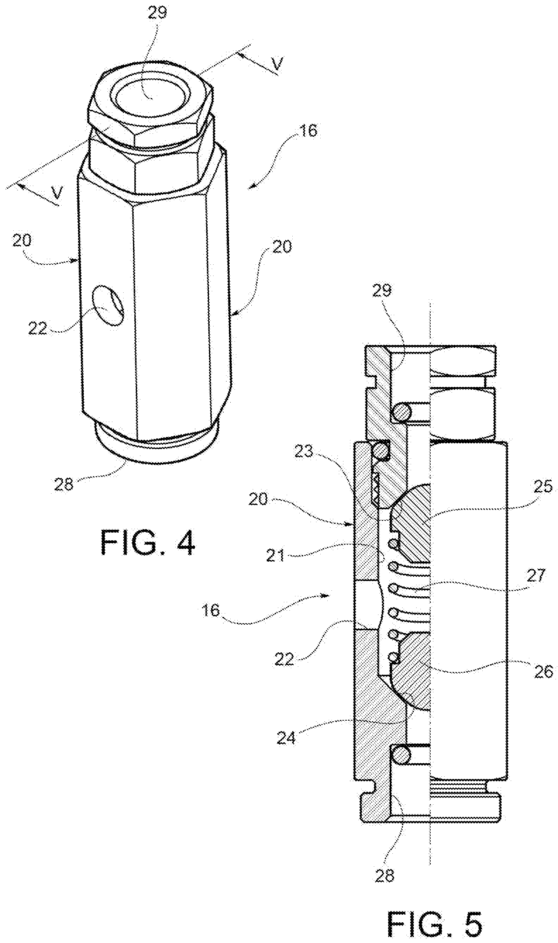

The valve device 16 may advantageously be constructed as shown in Figures 4 and 5, in which it comprises a body 20 of substantially tubular shape 20, in which a chamber 21 is defined. This chamber 21 has an opening 22 made in the wall of the body 20 and intended to be connected to the inlet of the solenoid valve 12 (see the diagram of Figure 3).

Inside the body 20, on either side of the opening 22, there are two valve seats 23 and 24 facing in opposite directions and associated with respective plugs 25 and 26 between which is a spring 27 which tends to urge each plug against the respective seat.

The plugs 25 and 26 control communication between the chamber 21 and two opposite inlets 28 and 29, provided at opposite ends of the body 20 and designed to be connected according to the diagram of Figure 3.

It can be seen that the valve device 16 is substantially symmetrical with respect to a median transverse plane, and therefore its inlets 28 and 29 are interchangeable.

The machine M according to Figure 3 operates essentially in the following manner.

At the beginning of a beverage preparation cycle, the electronic control unit ECU activates the pump 3 and energizes the solenoid valve 12, which goes into the open state.

The flow of water delivered by the pump 3 passes through the heating device 9 and reaches the inlet of the unidirectional valves 10 and 17. The valve 17, which has a lower opening pressure threshold, opens, allowing a flow of water from the discharge of the pump 3 to the drip recipient 8 through the solenoid valve 12. Water is thus drawn from the outlet of the pump 3, where necessary priming the latter.

Meanwhile, the ECU unit acquires signals, pulses supplied by the flow-rate meter 6. The latter is able to function only in the presence of a sufficient amount of water in the pumping chamber of the pump: if, within a predetermined time interval, for example two seconds, starting from activation of the pump, the ECU unit does not detect a predetermined number of pulses from the flow-rate meter, this means that the pump has not entered into operation, and the ECU unit warns the user of the failure to prime.

If, however, in this predetermined time interval, the ECU unit receives a number of pulses at least equal to the predetermined number from the flow-rate meter 6, the ECU unit thus de-energizes the solenoid valve 12, which returns to the closed state.

From this moment, the water downstream of the pump fills the branches of the hydraulic circuit downstream of the unidirectional valve 10 until, when the calibration pressure of the latter (for example 8 bar) is reached, it opens, allowing the flow of water to and through the brewing assembly 1.

Preparation and dispensing of the beverage has thus begun.

After reaching the quantity of beverage desired and pre-set by the user, the ECU unit turns off the pump 3 and causes the solenoid valve 12 to return to the open position. The pressure downstream of the unidirectional valve 10 then decreases abruptly and the hot water sitting between said valve 10 and the brewing assembly 1 may be discharged to the drip recipient through the unidirectional valve 18 and the solenoid valve 12.

After a predetermined time, the ECU unit causes the solenoid valve 12 to return to the closed state.

In the machines according to Figures 2 and 3, the discharge solenoid valve 12 is of the normally closed type. However, it is clear to a person skilled in the art that the same functions can be also be performed with a valve of the normally open type, after appropriate configuration of the ECU unit.

The invention makes it possible to dispense with a self-priming valve connected to the outlet of the pump 3, the pump being primed by means of a solenoid valve already present in the machine and designed to control an auxiliary function not used during the preparation of a beverage.

As well as the savings resulting from not using a self-priming valve, the invention offers the advantage of a more precise quantitative determination of the dose of beverage dispensed in that, after the pump has been primed, the signals supplied by the flow-rate meter are exclusively related to the flow of water that actually passes through the brewing assembly 1.

Naturally, without prejudice to the principle of the invention, the embodiments and structural details thereof may be varied widely with respect to those described and illustrated purely by way of non-limiting example, without thereby departing from the scope of the invention as defined in the appended claims.

## Claims

1. Machine (M) for the preparation of beverages, in particular espresso coffee, comprising
a brewing assembly (1),
a water tank (4),
an electric vibration pump (3) having its inlet connected to said tank (4) and its outlet or discharge connected to the brewing assembly (1), an unidirectional hydraulic valve (10) interposed between the pump (3) and the brewing assembly (1) to allow a flow of water towards the brewing assembly (1) when the pressure of the water supplied by the pump (3) exceeds a predetermined threshold,
electric heating means (9) for heating the water supplied by the pump (3),
at least one solenoid valve (12, 13) which has its inlet coupled between the outlet of the pump (3) and the inlet of the unidirectional hydraulic valve (10) and between the outlet of the unidirectional hydraulic valve (10) and the inlet of the brewing assembly (1), and is adapted to assume an open condition and a closed condition in which it allows and prevents, respectively, a flow of fluid from its inlet towards a discharge environment, for controlling an auxiliary function of the machine (M) which is not utilized for the preparation of the beverage; and
an electronic control unit (ECU) predisposed to drive the pump (3), the heating means (9) and said solenoid valve (12, 13) in predetermined manners;
wherein the electronic control unit (ECU) is predisposed for controlling said at least one solenoid valve (12, 13) such that upon starting a cycle for the preparation of a beverage said solenoid valve (12, 13) is opened for a predetermined period of time and allows a flow of water from the outlet or discharge of the pump (3) towards said discharge environment (8) so as to prime the pump (3), and is subsequently closed.

2. Machine according to claim 1, comprising a first solenoid valve (13), which is normally closed and is interposed between said electric heating means (9) and a steam-dispensing nozzle (14), and a second solenoid valve (12) interposed between the outlet of said unidirectional hydraulic valve (10) and a drip recipient (8), for discharging in said recipient the water which, after a beverage has been dispensed, remains between said unidirectional hydraulic valve (10) and the brewing assembly (1).

3. Machine according to claim 1, comprising one solenoid valve (12), whose inlet is connected with the outlet of the pump (3) through one further unidirectional hydraulic valve (17) adapted to allow a flow of water from the outlet of the pump (3) to said solenoid valve (12) when the pressure of water at the outlet of the pump (3) exceeds a pre-fixed threshold which is lower than said predetermined threshold, and with the outlet of said unidirectional hydraulic valve (10) through a third unidirectional valve (18) adapted to allow a flow of water towards said solenoid valve (12) when the pressure of water at the outlet of said unidirectional hydraulic valve (10) exceeds a pre-fixed value, lower than the threshold associated with said unidirectional hydraulic valve (10).

4. Machine according to any of the preceding claims, wherein the electronic control unit (ECU) is predisposed to close, after the pump (3) is activated for the preparation of a beverage, said at least one solenoid valve (12, 13) after a predetermined, fixed, time interval has elapsed from the activation of the pump (3).

5. Machine according to any of claims 1 to 3, wherein between said tank (4) and the inlet of the pump (3) a flow-rate meter (6) is disposed, adapted to provide the electronic control unit (ECU) with signals or pulses indicative of the flow-rate of the flow of water drawn by the pump (3), and wherein the electronic control unit (ECU) is predisposed to close, after the pump (3) has been activated for preparing a beverage, said at least one solenoid valve (12, 13) when the signals provided by the flow-rate meter (6) indicate that in a pre-fixed time interval the pump (3) has drawn a quantity of water at least equal to a predetermined value.

## Patentansprüche

1. Maschine (M) für die Zubereitung von Getränken, insbesondere Espressokaffee, umfassend
eine Brühgruppe (1),
einen Wassertank (4),
eine elektrische Vibrationspumpe (3), deren Einlass mit dem Tank (4) verbunden ist und deren Auslass oder Auslauf mit der Brühgruppe (1) verbunden ist,
ein unidirektionales Hydraulikventil (10), welches zwischen der Pumpe (3) und der Brühgruppe (1) angeordnet ist, um ein Fließen von Wasser zu der Brühgruppe (1) zu ermöglichen, wenn der Druck des durch die Pumpe (3) zugeführten Wassers einen vorgegebenen Schwellenwert übersteigt,
elektrische Heizmittel (9) zum Heizen des durch die Pumpe (3) zugeführten Wassers,
mindestens ein Magnetventil (12, 13), dessen Einlass zwischen den Auslass der Pumpe (3) und den Einlass des unidirektionalen Hydraulikventils (10) und zwischen den Auslass des unidirektionalen Hydraulikventils (10) und den Einlass der Brühgruppe (1) gekoppelt ist und welches dafür geeignet ist, einen offenen Zustand und einen geschlossen Zustand anzunehmen, in dem es ein Fließen von Fluid von seinem Einlass zu einer Auslaufumgebung ermöglicht bzw. verhindert, um eine Zusatzfunktion der Maschine (M) zu steuern oder zu regeln, welche nicht für die Zubereitung des Getränks verwendet wird; und
eine elektronische Steuereinheit oder Regeleinheit (ECU), welche dafür ausgebildet ist, die Pumpe (3), die Heizmittel (9) und das Magnetventil (12, 13) auf vorgegebene Weisen anzutreiben;
wobei die elektronische Steuereinheit oder Regeleinheit (ECU), dafür ausgebildet ist, das mindestens eine Magnetventil (12, 13) derart zu steuern oder zu regeln, dass beim Starten eines Zyklus für die Zubereitung eines Getränks das Magnetventil (12, 13) für eine vorgegebene Zeitdauer geöffnet ist und ein Fließen von Wasser von dem Auslass oder Auslauf der Pumpe (3) zu der Auslaufumgebung (8) ermöglicht, um die Pumpe (3) vorzufüllen, und anschließend geschlossen ist.

2. Maschine nach Anspruch 1, umfassend ein erstes Magnetventil (13), welches normalerweise geschlossen ist und zwischen den elektrischen Heizmitteln (9) und einer Dampfabgabedüse (14) angeordnet ist, und ein zweites Magnetventil (12), welches zwischen dem Auslass des unidirektionalen Hydraulikventils (10) und einem Tropfbehälter (8) angeordnet ist, um in diesen Behälter das Wasser abzugeben, welches, nachdem ein Getränk ausgegeben worden ist, zwischen dem unidirektionalen Hydraulikventil (10) und der Brühgruppe (1) verbleibt.

3. Maschine nach Anspruch 1, umfassend ein Magnetventil (12), dessen Einlass durch ein weiteres unidirektionales Hydraulikventil (17), welches dafür geeignet ist, ein Fließen von Wasser von dem Auslass der Pumpe (3) zu dem Magnetventil (12) ermöglichen, wenn der Druck von Wasser an dem Auslass der Pumpe (3) einen vorher festgelegten Schwellenwert übersteigt, welcher niedriger als der vorgegebene Schwellenwert ist, mit dem Auslass der Pumpe (3) verbunden ist, und durch ein drittes unidirektionales Hydraulikventil (18), welches dafür geeignet ist, ein Fließen von Wasser zu dem Magnetventil (12) zu ermöglichen, wenn der Druck von Wasser an dem Auslass des unidirektionalen Hydraulikventils (10) einen vorher festgelegten Wert übersteigt, welcher niedriger als der zu dem unidirektionalen Hydraulikventil (10) gehörende Schwellenwert ist, mit dem Auslass des unidirektionalen Hydraulikventils (10) verbunden ist.

4. Maschine nach einem der vorhergehenden Ansprüche, wobei die elektronische Steuereinheit oder Regeleinheit (ECU) dafür ausgebildet ist, nachdem die Pumpe (3) für die Zubereitung eines Getränks aktiviert ist, das mindestens eine Magnetventil (12, 13) zu schließen, nachdem ein vorbestimmter, festgelegter Zeitintervall von der Aktivierung der Pumpe (3) an abgelaufen ist.

5. Maschine nach einem der Ansprüche 1 bis 3, wobei zwischen dem Tank (4) und dem Einlass der Pumpe (3) ein Durchflussmesser (6) angeordnet ist, welcher dafür geeignet ist, der elektronischen Steuereinheit oder Regeleinheit (ECU) Signale oder Impulse zu liefern, welche die Durchflussrate des Fließens von von der Pumpe (3) angesaugtem Wasser anzeigen, und wobei die elektronische Steuereinheit oder Regeleinheit (ECU) dafür ausgebildet ist, nachdem die Pumpe (3) zum Zubereiten eines Getränks aktiviert ist, das mindestens eine Magnetventil (12, 13) zu schließen, wenn die durch den Durchflussmesser (6) gelieferten Signale anzeigen, dass die Pumpe (3) ein einem vorher festgelegten Zeitintervall eine Menge an Wasser angesaugt hat, die zumindest gleich einem vorgegebenen Wert ist.

## Revendications

1. Machine (M) pour la préparation de boissons, en particulier de café expresso, comprenant
un ensemble d'infusion (1),
un réservoir d'eau (4),
une pompe de vibration électrique (3) ayant son admission raccordée audit réservoir (4) et son refoulement ou son évacuation raccordé(e) à l'ensemble d'infusion (1),
une vanne hydraulique unidirectionnelle (10) interposée entre la pompe (3) et l'ensemble d'infusion (1) pour autoriser un écoulement d'eau vers l'ensemble d'infusion (1) lorsque la pression de l'eau fournie par la pompe (3) dépasse un seuil prédéterminé,
des moyens de chauffage électrique (9) pour chauffer l'eau fournie par la pompe (3),
au moins une électrovanne (12, 13) dont l'admission est couplée entre le refoulement de la pompe (3) et l'admission de la vanne hydraulique unidirectionnelle (10) et entre le refoulement de la vanne hydraulique unidirectionnelle (10) et l'admission de l'ensemble d'infusion (1), et est adaptée pour adopter une condition ouverte et une condition fermée dans lesquelles elle autorise et empêche, respectivement, un écoulement de fluide de son admission vers un environnement d'évacuation, pour contrôler une fonction auxiliaire de la machine (M) qui n'est pas utilisée pour la préparation de la boisson ; et
une unité de commande électronique (UCE) prédisposée pour entraîner la pompe (3), les moyens de chauffage (9) et ladite électrovanne (12, 13) de manières prédéterminées ;
dans laquelle l'unité de commande électronique (UCE) est prédisposée pour commander ladite au moins une électrovanne (12, 13) de sorte que lors du démarrage d'un cycle de préparation d'une boisson, ladite électrovanne (12, 13) soit ouverte pendant une période prédéterminée et autorise un écoulement d'eau depuis le refoulement ou l'évacuation de la pompe (3) vers ledit environnement d'évacuation (8) de manière à amorcer la pompe (3), et soit ultérieurement fermée.

2. Machine selon la revendication 1, comprenant une première électrovanne (13), qui est normalement fermée, et est interposée entre lesdits moyens de chauffage électrique (9) et une buse de distribution de vapeur (14), et une seconde électrovanne (12) interposée entre le refoulement de ladite vanne hydraulique unidirectionnelle (10) et un récipient à goutte (8), pour une évacuation dans ledit récipient de l'eau qui, après qu'une boisson a été distribuée, reste entre ladite vanne hydraulique unidirectionnelle (10) et l'ensemble d'infusion (1).

3. Machine selon la revendication 1, comprenant une électrovanne (12), dont l'admission est raccordée au refoulement de la pompe (3) par le biais d'une vanne hydraulique unidirectionnelle supplémentaire (17) adaptée pour autoriser un écoulement d'eau du refoulement de la pompe (3) vers ladite électrovanne (12) lorsque la pression d'eau au refoulement de la pompe (3) dépasse un seuil préfixé qui est inférieur audit seuil prédéterminé, et avec le refoulement de ladite vanne hydraulique unidirectionnelle (10) par le biais d'une troisième vanne unidirectionnelle (18) adaptée pour autoriser un écoulement d'eau vers ladite électrovanne (12) lorsque la pression d'eau au refoulement de ladite vanne hydraulique unidirectionnelle (10) dépasse une valeur préfixée, inférieure au seuil associé à ladite vanne hydraulique unidirectionnelle (10).

4. Machine selon l'une quelconque des revendications précédentes, dans laquelle l'unité de commande électronique (UCE) est prédisposée pour fermer, après que la pompe (3) est activée pour la préparation d'une boisson, ladite au moins une électrovanne (12, 13) après qu'un intervalle de temps fixe prédéterminé s'est écoulé depuis l'activation de la pompe (3).

5. Machine selon l'une quelconque des revendications 1 à 3, dans laquelle entre ledit réservoir (4) et l'admission de la pompe (3), est disposé un débitmètre (6), adapté pour fournir à l'unité de commande électronique (UCE) des signaux ou impulsions indicatifs du débit de l'écoulement d'eau tiré par la pompe (3), et dans laquelle l'unité de commande électronique (UCE) est prédisposée pour fermer, après que la pompe (3) a été activée pour préparer une boisson, ladite au moins une électrovanne (12, 13) lorsque les signaux fournis par le débitmètre (6) indiquent que dans un intervalle de temps préfixé, la pompe (3) a tiré une quantité d'eau au moins égale à une valeur prédéterminée.
